# EUROPÄISCHE PATENTSCHRIFT

(11) **EP 3 475 148 B1**
(45) Veröffentlichungstag und Bekanntmachung des Hinweises auf die Patenterteilung: **13.05.2020**
(21) Anmeldenummer: 17735026.1
(22) Anmeldetag: 22.06.2017
(51) Int. Cl.: B62D 5/04

(54) **KUGELGEWINDETRIEB EINER ELEKTROMECHANISCHEN SERVOLENKUNG MIT INTEGRIERTEM SCHRÄGKUGELLAGER UND KOMPENSATION UNTERSCHIEDLICHER WÄRMEAUSDEHNUNGEN**
BALL SCREW OF AN ELECTROMECHANICAL POWER STEERING WITH INTEGRATED ANGULAR BALL BEARING AND COMPENSATING DIFFERENT THERMAL EXPANSIONS
VIS À BILLE D'UNE SERVODIRECTION ELECTROMÉCHANIQUE AVEC ROULEMENT EN BIAIS INTÉGRÉ QUI COMPENSE DES EXPANSIONS THERMIQUES DIFFÉRENTS

(30) Priorität: 22.06.2016 DE 102016007540
(43) Veröffentlichungstag der Anmeldung: 01.05.2019
(73) Patentinhaber: thyssenkrupp Presta AG, 9492 Eschen (LI); thyssenkrupp AG, 45143 Essen (DE)
(72) Erfinder: ILLÉS, András, 9473 Gams (CH); RAITHER, Wolfram, 9470 Buchs (CH)
(74) Vertreter: thyssenkrupp Intellectual Property GmbH
(86) Internationale Anmeldenummer: PCT/EP2017/065363
(87) Internationale Veröffentlichungsnummer: WO 2017/220717

(56) Entgegenhaltungen:
- EP-A2- 2 594 457
- US-A1- 2009 294 203

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort das vom Fahrer eingeleitete Lenkmoment überlagert.

Eine gattungsgemäße elektromechanische Servolenkung weist einen Servomotor auf, der auf eine Kugelmutter eines Kugelgewindetriebs wirkt. Die Kugelmutter steht über umlaufende Kugeln mit einem Kugelgewinde in Eingriff, welches am äußeren Umfang einer Zahnstange angeordnet ist, die Teil einer Zahnstangenlenkung ist. Eine Drehung der Kugelmutter bewirkt eine axiale Verlagerung der Zahnstange, wodurch eine Lenkbewegung des Fahrers unterstützt wird. Bevorzugt ist der Kugelgewindetrieb über einen Zahnriemen mit dem Elektromotor gekoppelt.

Die Kugelmutter ist in einem Kugellager in dem Lenkungsgehäuse drehbar gelagert. Auf die Zahnstange außerhalb der Achse wirkende Kräfte erzeugen Kippmomente der Zahnstange, die von dem Lager abgefangen werden müssen. Das Lager unterliegt weiterhin Temperatureinflüssen, die im Betrieb aufgrund der unterschiedlichen Wärmeausdehnungskoeffizienten der Lagerschalen und des Lenkungsgehäuses, beispielsweise zu einer Bildung von Spalten im Bereich des Lagersitzes oder zur Schädigung der Bauteile führen, wenn diese nicht kompensiert werden.

Es ist bekannt, Schrägkugellager zur Lagerung der Kugelmutter einzusetzen. Schrägkugellager können hohe Axial- und Kippkräfte aufnehmen, ohne beschädigt zu werden. Allerdings sind sie gegenüber einfachen Kugellagern nur unter hohem Aufwand herstellbar und daher relativ teuer.

Aus der Offenlegungsschrift DE 10 2007 048 075 A1 ist ein Kugelgewindetrieb mit einem einseitig angefederten einreihigen Lager bekannt. Die einseitig am Lager anliegende Feder hat die Aufgabe, Kippmomente und eine Wärmeausdehnung auszugleichen und gleichzeitig das Lager im Gehäuse zu fixieren.

Die Offenlegungsschrift US 2015/0183455 A1 offenbart zwei Schrägkugellager zur Lagerung einer Kugelmutter eines Kugelgewindetriebs. Die Lager weisen jeweils einen Lagerinnenring und einen Lageraußenring auf, zwischen denen Kugeln angeordnet sind. Die beiden Lageraußenringe stützen sich einseitig gefedert am Gehäuse ab. Dabei ist es nachteilig, dass keine ausreichende Wärmekompensation erfolgen kann.

Aus der US 2009/0294203 A1 ist es bekannt, dass der Lageraußenring in einer dünnwandigen zylindrischen Hülse aufgenommen ist, die in einem Lagersitz des Gehäuses angeordnet ist. Auch bei dieser Anordnung kann keine ausreichende Wärmekompensation erfolgen. US 2009/294203 A1 offenbart jedoch eine elektromechanische Servolenkung nach dem Oberbegriff des Anspruchs 1.

Es ist Aufgabe der vorliegenden Erfindung, eine elektromechanische Servolenkung mit einem Kugelgewindetrieb anzugeben, bei dem die Kugelmutter in einem Lager gelagert ist, wobei Wärmeausdehnungen kompensiert werden können.

Diese Aufgabe wird von einer elektromechanischen Servolenkung mit den Merkmalen des Anspruchs 1 gelöst. Weitere vorteilhafte Ausführungen der Erfindung sind den Unteransprüchen zu entnehmen.

Demnach ist eine elektromechanische Servolenkung, insbesondere für ein Kraftfahrzeug, mit einem Servomotor, der ein axial verlagerbares Bauelement über eine in einem Gehäuse drehbar in einem Lager gelagerte Kugelmutter antreibt, wobei die Kugelmutter mit einer an dem Bauelement ausgebildeten Gewindespindel in Eingriff steht, vorgesehen, wobei das Lager ein zweireihiges Schrägkugellager mit wenigstens einem Lagerinnenring und wenigstens einem Lageraußenring ist, wobei der wenigstens eine Lageraußenring in einer Hülse aufgenommen ist, die in einem Lagersitz des Gehäuses angeordnet ist, wobei erfindungsgemäß vorgesehen ist, dass die Hülse dazu eingerichtet ist, Wärmeausdehnungen zwischen dem Gehäuse und der Kugelmutter zu kompensieren, wobei die Hülse aus einem Werkstoff gebildet wird, der eine größere Wärmeausdehnung als Aluminium und Stahl besitzt.

Das Schrägkugellager verbessert die Kippsteifigkeit der Lagerung der Kugelmutter und kann hohe Axialkräfte übertragen. Die Hülse kann unterschiedliche Wärmeausdehnungen der Komponenten kompensieren.

Bevorzugt sind die Kontaktwinkel des zweireihigen Schrägkugellagers so ausgewählt, dass sich ein Stützabstand ausbildet. Dadurch wird die Kippsteifigkeit weiter erhöht. Es ist vorteilhaft, wenn die Kontaktwinkel beider Reihen des Schrägkugellagers gleich sind.

In einer vorteilhaften Ausführungsform sind zwei Lageraußenringe vorgesehen, wobei der Lagerinnenring einteilig ist. Dabei ist es bevorzugt, dass der einteilige Lagerinnenring durch die Kugelmutter gebildet ist.

Vorzugsweise ist die Hülse aus Kunststoff gefertigt.

Es ist weiterhin bevorzugt, wenn eine Wellfeder von der Hülse umschlossen angeordnet ist, die zwischen Hülse und Lageraußenring liegend, eine axiale Bewegung des Bauelements dämpft.

Das Bauelement ist vorzugsweise eine Zahnstange eines Zahnstangenlenkgetriebes.

Nachfolgend wird ein Ausführungsbeispiel der vorliegenden Erfindung anhand der Zeichnung beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung mit Kugelgewindetrieb;
- Figur 2:: eine räumliche Darstellung eines erfindungsgemäßen Kugelgewindetriebs ohne das umschließende Gehäuse;
- Figur 3:: einen Längsschnitt durch das erfindungsgemäße Schrägkugellager, sowie
- Figur 4:: eine teilweise Explosionsdarstellung des Schrägkugellagers des Kugelgewindetriebs entsprechend den Figuren 2 und 3.

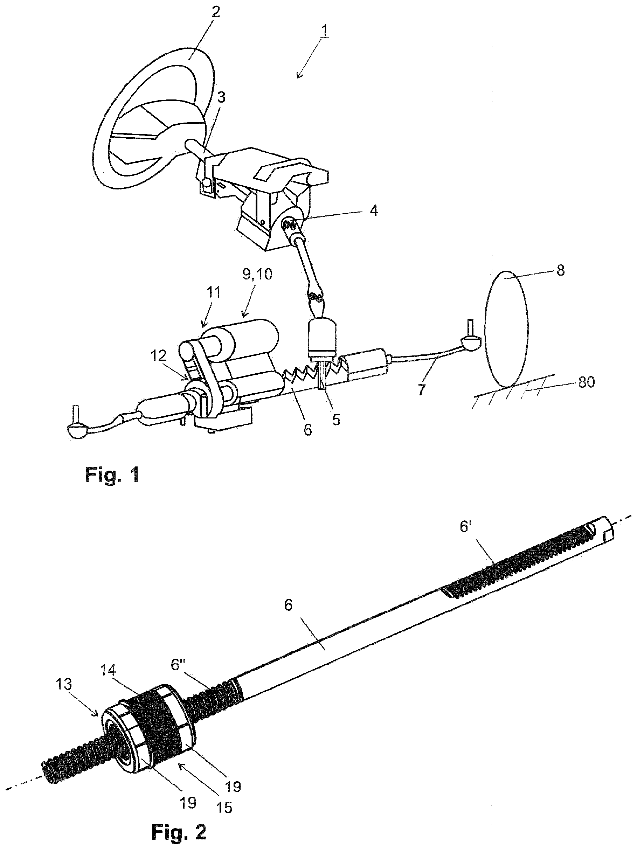

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab in funktioneller Verbindung mit der unteren Lenkwelle 4. Die untere Lenkwelle 4 ist mit einem Ritzel 5 drehfest verbunden. Das Ritzel 5 kämmt in bekannter Weise mit einem Zahnsegment 6' einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegenwirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen. Dazu treibt der Elektromotor 9 über einen Riementrieb 11 eine Kugelmutter 13 eines Kugelgewindetriebs 12 an. Eine Drehung der Mutter 13 versetzt die Gewindespindel des Kugelgewindetriebs 12, die Teil der Zahnstange 6 ist, in eine Axialbewegung, die letztlich eine Lenkbewegung für das Kraftfahrzeug bewirkt.

Auch wenn hier im Beispiel eine elektromechanische Servolenkung mit mechanischer Kopplung zwischen Lenkrad 2 und Lenkritzel 5 dargestellt ist, kann die Erfindung auch für Kraftfahrzeuglenkungen angewendet werden, bei denen keine mechanische Kopplung vorhanden ist. Derartige Lenksysteme sind unter dem Begriff Steer-by-Wire bekannt.

In der Figur 2 ist der Kugelgewindetrieb räumlich dargestellt. Eine Gewindespindel 6" ist Teil der Zahnstange 6 und beabstandet zum Zahnsegment 6' angeordnet. Die Kugelmutter 13 weist auf ihrer äußeren Umfangsfläche eine Riemenscheibe 14 auf.

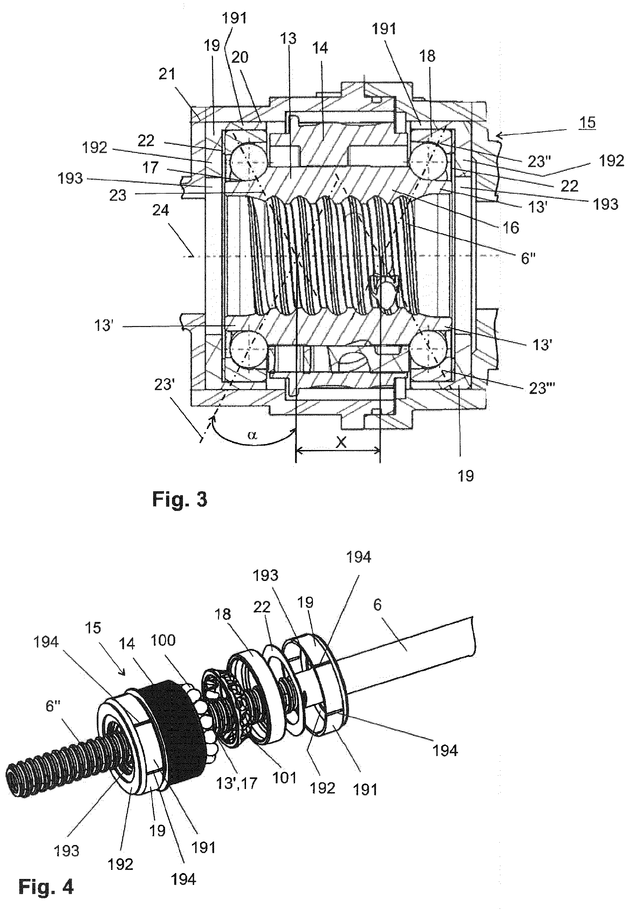

In Figur 3 sind die Kugelmutter 13 und die Gewindespindel 6" in einem Längsschnitt dargestellt. Die Kugelmutter 13 ist in einem zweireihigen Schrägkugellager 15 drehbar gelagert. Das Lager 15 weist einen einzigen gemeinsamen Innenring 16 auf, der durch die Kugelmutter 13 gebildet ist. Dazu weist die Kugelmutter 13 an ihren Enden 13' auf ihrer Außenumfangsfläche 16 jeweils eine umlaufende Ausnehmung 17 für eine Kugellaufbahn auf. Die Ausnehmung 17 bzw. das Laufbahnprofil ist dabei entsprechend einem Schrägkugellager ausgestaltet. Das Lager 15 weist weiterhin zwei Außenringe 18 auf. Die Außenringe 18 sind voneinander beabstandet und jeweils in einer separaten Hülse 19 aufgenommen, die in je einem Lagersitz 20 des Gehäuses 21 angeordnet ist. Auf der Kugelmutter 13 ist die Riemenscheibe 14 des Zahnriemenantriebs 11 drehfest befestigt. Die Hülse 19 wird bevorzugt aus einem Werkstoff gebildet, der eine größere Wärmeausdehnung als Aluminium und Stahl besitzt. Insbesondere ist die Hülse 19 bevorzugt aus einem Kunststoff, besonders bevorzugt aus PA66GF30 (Polyamid 66 mit Glasfaserverstärkung mit 30% Volumenanteil) gebildet. Sie kompensiert Wärmeausdehnungen zwischen dem Getriebegehäuse 21 und dem Kugelgewindetrieb 12.

Bevorzugt umfasst die Hülse eine kreiszylindrische Umfangswand 191, die das Lager 15 und die Lagerachse 24 umschließt, und einen kreiszylindrischen Bodenbereich 192, der sich radial nach Innen in Richtung der Lagerachse 24 erstreckt und eine kreiszylindrische Öffnung 193 aufweist, die die Lagerachse 24 umschließt. Die beiden separaten Hülsen 19 sind dabei bevorzugt derart angeordnet, dass die beiden Lager 15 zwischen den beiden Bodenbereiche 192 angeordnet sind. Bevorzugt sind die Bodenbereiche 192 eben ausgebildet mit bevorzugt konstanter Dicke. Es ist aber auch denkbar und möglich, die Bodenbereiche gezielt mit Rillen, Gravuren oder Rippen oder einer Wellenform zu versehen, um beispielsweise die Schmierung und/oder die Wärmeeigenschaften gezielt zu beeinflussen.

Zur weiteren Verbesserung der Kompensationseigenschaften kann die Hülse in ihrer Umfangswand 191 Ausnehmungen, bevorzugt sich in Richtung der Lagerachse 24 erstreckende Schlitze 194 aufweisen. Diese Schlitze laufen bevorzugt zum bis ans offene Ende der Umfangswand 191, das vom Bodenbereich 192 weggerichtet ist. Mit anderen Worten sind die Schlitze 194 in Richtung der Riemenscheibe 14 geöffnet.

Die Hülse 19 ist bevorzugt einstückig aus einem einzigen Bauteil, bevorzugt integral aus einem einzigen Werkstoff gebildet, besonders bevorzugt in einem Spritzgussverfahren.

Wie in Figur 4 dargestellt, ist in der Hülse 19 eine Wellfeder 22 angeordnet, die das Lager 15 vorspannt. Die Wellfeder 22 liegt zwischen Hülse 19 und Lageraußenring 18. Durch die Kombination von Hülse 19 und Wellfeder 22 lässt sich die Anbindungssteifigkeit einstellen. Zudem ermöglicht diese Kombination eine Dämpfung der Bewegung des Lagers 15 bei dynamischen Belastungen. Je nach Anwendungsfall kann jedoch diese Wellfeder 22 durch eine Tellerfeder oder durch eine Kombination aus Tellerfeder und Wellfeder ersetzt werden.

Die Kugeln 100 des Schrägkugellagers 15 werden in einem Kugelkäfig 101 geführt.

Die Laufbahnen des zweireihigen Schrägkugellagers 15 sind so ausgeführt, dass die Verbindungslinien 23, 23', 23", 23''' der Berührungspunkte zwischen Kugel und Laufbahnen die Lagerachse 24 zwischen den Außenringen 18 liegend schneiden. Zwischen den beiden Schnittpunkten mit der Lagerachse 24 bildet sich ein vordefinierter Stützabstand X aus. Durch den Stützabstand X wird das Lager 15 besonders kippsteif. Als Kontaktwinkel α wird der Winkel bezeichnet, den eine Verbindungslinie der beiden Berührungspunkte zwischen Kugel 100 und Laufbahnen mit der Radialebene einschließt und unter dem die Belastung von einer Laufbahn auf die andere übertragen wird. Unter dem Kontaktwinkel ist dabei der Winkel zu verstehen, unter dem sich die Verbindungslinien mit der Lagerachse schneiden, wobei die Verbindungslinien ausgehend vom Mittelpunkt der Kugeln des jeweiligen Schrägkugellagers durch den jeweiligen Kontakt zur Lauffläche des Lagerinnenrings verlaufen. Die Schnittpunkte der Verbindungslinien mit der Lagerachse der beiden Reihen des zweireihigen Schrägkugellagers bilden zueinander den Stützabstand, gemessen auf der Lagerachse.

In dem Fall, dass die Kugeln in einem zweifachen Kontakt mit dem Lagerinnenring stehen, wird als Verbindungslinie die Winkelhalbierende der beiden Kontakt-Verbindungslinien, vom durch den jeweiligen Kontakt und den jeweiligen Mittelpunkt der Kugel verlaufen definiert.

Bevorzugt liegt dieser Stützabstand in einem Bereich von minimal dem einfachen Durchmesser der Kugeln des Schrägkugellagers und dem dreifachen des Durchmessers der Kugeln des Schrägkugellagers. Es ist jedoch zu bevorzugen, diesen Stützabstand in einem Bereich des 1,5 fachen bis 2,5fachen und besonders bevorzugt des zweifachen Durchmessers der Kugeln des Schrägkugellagers auszubilden. In dem Fall, das die beiden Lager des Schrägkugellagers unterschiedliche Kugeldurchmesser aufweisen, ist der kleinere Kugeldurchmesser als Maßstab anzusehen.

Bevorzugt ist der Kontaktwinkel für beide Reihen des Lagers 15 gleich groß. Mit einem vordefinierten Wert des Stützabstandes X lässt sich bei einem bestimmten Kontaktwinkel α die optimale Kippsteifigkeit des Lagers 15 einstellen.

Das Lager 15 der Kugelmutter 13 ist so ausgestaltet, dass die Kugelrückführung 25 bzw. der Umlenkkörper 26 zwischen Kugelmutter 13 und Riemenscheibe 14 angeordnet werden kann. Die Kugelrückführung bzw. der Umlenkkörper 26 findet somit Platz innerhalb des zweireihigen Lagers, wodurch die Anordnung besonders kompakt wird.

Das erfindungsgemäße Lager weist gegenüber herkömmlichen Lagern eine verbesserte Kippsteifigkeit auf. Es kann hohe Axialkräfte übertragen und zudem Wärmeausdehnungen mittels der Hülse kompensieren. Weiterhin werden durch den Einsatz der Hülse auch die Geräuscheigenschaften des Lenksystems verbessert.

## Patentansprüche

1. Elektromechanische Servolenkung (1) für ein Kraftfahrzeug, mit einem Servomotor (9), der ein axial verlagerbares Bauelement (6) über eine in einem Gehäuse (21) drehbar in einem Lager (15) gelagerte Kugelmutter (13) antreibt, wobei die Kugelmutter (13) mit einer an dem Bauelement (6) ausgebildeten Gewindespindel (6") in Eingriff steht, wobei das Lager (15) ein zweireihiges Schrägkugellager mit wenigstens einem Lagerinnenring (16) und wenigstens einem Lageraußenring (18) ist, wobei der wenigstens eine Lageraußenring (18) in einer Hülse (19) aufgenommen ist, die in einem Lagersitz (20) des Gehäuses (21) angeordnet ist, **dadurch gekennzeichnet, dass** die Hülse (19) dazu eingerichtet ist, Wärmeausdehnungen zwischen dem Gehäuse (21) und der Kugelmutter (13) zu kompensieren, wobei die Hülse (19) aus einem Werkstoff gebildet wird, der eine größere Wärmeausdehnung als Aluminium und Stahl besitzt.

2. Elektromechanische Servolenkung nach Anspruch 1, **dadurch gekennzeichnet, dass** die Kontaktwinkel (α) des zweireihigen Schrägkugellagers (15) so ausgewählt sind, dass sich ein Stützabstand (X) ausbildet.

3. Elektromechanische Servolenkung nach Anspruch 2, **dadurch gekennzeichnet, dass** die Kontaktwinkel (α) beider Reihen des Schrägkugellagers (15) gleich sind.

4. Elektromechanische Servolenkung nach einem der vorhergehenden Ansprüche, **dadurch gekennzeichnet, dass** zwei Lageraußenringe (18) vorgesehen sind, wobei der Lagerinnenring (16) einteilig ist.

5. Elektromechanische Servolenkung nach Anspruch 4, **dadurch gekennzeichnet, dass** der einteilige Lagerinnenring (16) durch die Kugelmutter (13) gebildet ist.

6. Elektromechanische Servolenkung nach einem der vorhergehenden Ansprüche, **dadurch gekennzeichnet, dass** die Hülse (19) aus Kunststoff gefertigt ist.

7. Elektromechanische Servolenkung nach einem der vorhergehenden Ansprüche, **dadurch gekennzeichnet, dass** eine Wellfeder (22) in der Hülse (19) angeordnet ist, die zwischen Hülse (19) und Lageraußenring (18) liegend eine axiale Bewegung des Bauelements (6) dämpft.

8. Elektromechanische Servolenkung nach einem der vorhergehenden Ansprüche, **dadurch gekennzeichnet, dass** das Bauelement (6) eine Zahnstange eines Zahnstangenlenkgetriebes ist.

## Claims

1. Electromechanical servo-assisted power steering system (1) for a motor vehicle, having a servo motor (9) which drives an axially displaceable structural element (6) by means of a ball nut (13) which is rotatably supported in a bearing (15) in a housing (21), wherein the ball nut (13) is in engagement with a threaded spindle (6'') which is constructed on the structural element (6), wherein the bearing (15) is a dual-row angular ball bearing having at least one bearing inner ring (16) and at least one bearing outer ring (18), wherein the at least one bearing outer ring (18) is received in a sleeve (19) which is arranged in a bearing seat (20) of the housing (21), **characterized in that** the sleeve (19) is configured to compensate for thermal expansions between the housing (21) and the ball nut (13), wherein the sleeve (19) is formed from a material which has a greater thermal expansion than aluminum and steel.

2. Electromechanical servo-assisted power steering system according to Claim 1, **characterized in that** the contact angles (α) of the dual-row angular ball bearing (15) are selected in such a manner that a support spacing (X) is formed.

3. Electromechanical servo-assisted power steering system according to Claim 2, **characterized in that** the contact angles (α) of both rows of the angular ball bearing (15) are identical.

4. Electromechanical servo-assisted power steering system according to one of the preceding claims, **characterized in that** two bearing outer rings (18) are provided, wherein the bearing inner ring (16) is in one piece.

5. Electromechanical servo-assisted power steering system according to Claim 4, **characterized in that** the one-piece bearing inner ring (16) is formed by the ball nut (13).

6. Electromechanical servo-assisted power steering system according to one of the preceding claims, **characterized in that** the sleeve (19) is produced from plastics material.

7. Electromechanical servo-assisted power steering system according to one of the preceding claims, **characterized in that** there is arranged in the sleeve (19) an ondular washer (22) which in a state located between the sleeve (19) and bearing outer ring (18) damps an axial movement of the structural element (6).

8. Electromechanical servo-assisted power steering system according to one of the preceding claims, **characterized in that** the structural element (6) is a toothed rack of a rack-and-pinion steering gear.

## Revendications

1. Direction assistée électromécanique (1) destinée à un véhicule automobile et comprenant un servomoteur (9) qui entraîne un composant (6) déplaçable axialement par le biais d'un écrou à billes (13) monté à rotation dans un palier (15) dans un boîtier (21), l'écrou à billes (13) étant en engagement avec une broche filetée (6") formée au niveau du composant (6), le palier (15) étant un palier à billes à contact oblique à deux rangées comprenant au moins une bague intérieure (16) et au moins une bague extérieure (18), l'au moins une bague extérieure (18) étant reçue dans un manchon (19) qui est disposé dans un siège de palier (20) du boîtier (21), **caractérisé en ce que** le manchon (19) est conçu pour compenser des dilatations thermiques entre le boîtier (21) et l'écrou à billes (13), le manchon (19) étant formé à partir d'un matériau dont la dilatation thermique est supérieure à celle de l'aluminium et de l'acier.

2. Direction assistée électromécanique selon la revendication 1, **caractérisée en ce que** l'angle de contact (α) du palier à billes à contact oblique à deux rangées (15) est choisi de manière à former une distance d'appui (X).

3. Direction assistée électromécanique selon la revendication 2, **caractérisée en ce que** l'angle de contact (α) des deux rangées du palier à billes à contact oblique (15) est le même.

4. Direction assistée électromécanique selon l'une des revendications précédentes, **caractérisée en ce que** deux bagues extérieures (18) sont prévues, la bague intérieure (16) étant d'une seule pièce.

5. Direction assistée électromécanique selon la revendication 4, **caractérisée en ce que** la bague intérieure (16) d'une seule pièce est formée par l'écrou à billes (13).

6. Direction assistée électromécanique selon l'une des revendications précédentes, **caractérisée en ce que** le manchon (19) est fabriqué à partir d'une matière plastique.

7. Direction assistée électromécanique selon l'une des revendications précédentes, **caractérisée en ce qu'**un ressort ondulé (22) est disposé dans le manchon (19) et amortit un mouvement axial du composant (6) entre le manchon (19) et la bague extérieure (18).

8. Direction assistée électromécanique selon l'une des revendications précédentes, **caractérisée en ce que** le composant (6) est une crémaillère d'une transmission à crémaillère.
